# EUROPEAN PATENT APPLICATION

(11) **EP 4 681 872 A1**
(43) Date of publication of application: **21.01.2026**
(21) Application number: 24770536.1
(22) Date of filing: 28.02.2024
(51) Int. Cl.: B23Q 17/22, B23B 25/06, B23B 29/24, G05B 19/401

(54) **MACHINE TOOL, AND METHOD FOR CONTROLLING MACHINE TOOL**

(30) Priority: 13.03.2023 JP 2023038668
(71) Applicant: Citizen Watch Co., Ltd., Nishitokyo-shi, Tokyo 188-8511 (JP); Citizen Machinery Co., Ltd., Nagano 389-0206 (JP)
(72) Inventor: WATABE, Shuichi, Kitasaku-gun, Nagano 389-0206 (JP); HAYASHI, Erisha, Kitasaku-gun, Nagano 389-0206 (JP); SUZUKI, Toshiyuki, Kitasaku-gun, Nagano 389-0206 (JP); HOSHIDE, Haruna, Kitasaku-gun, Nagano 389-0206 (JP)
(74) Representative: Ribeiro, James Michael
(86) International application number: PCT/JP2024/007404
(87) International publication number: WO 2024/190425

(57) **Abstract**

This machine tool holds measurement probes and causes the measurement probes to come into contact with an object to be cut, to measure dimensions of the object to be cut. The machine tool is characterized in that the machine tool comprises a main spindle to which the object to be cut is attached, a plurality of holding portions capable of holding the measurement probes, a receiver for receiving signals transmitted after the measurement probes have come into contact with the object to be cut, and a control unit for controlling the operations of the plurality of holding portions, and in that: the control unit moves one of the plurality of holding portions; and if the receiver receives a signal from a measurement probe that is not associated with any of the plurality of holding portions, the control unit associates the moved holding portion with the measurement probe that transmitted the signal to the receiver, on the basis of the signal received by the receiver.

## Description

### [Technical Field]

The present invention relates to a machine tool that performs measurements using a measurement probe.

### [Background Art]

In a machine tool, the dimensions of an object to be cut are measured inside the machine using a measurement probe such as a touch probe. A typical measurement probe for performing measurements inside a machine tool is a wireless communication type measurement probe.

When a wireless communication type measurement probe is used to measure the dimensions of an object to be cut, it is necessary to preset the association between the measurement probe and the receiver that receives the signal transmitted by the measurement probe, and the association between the measurement probe and the holding portion that holds the measurement probe. PTL 1 discloses a configuration in which a user manually sets an identity code for identifying the measurement probe, and associates the measurement probe with a receiver.

### [Citation List]

### [Patent Literature]

[PTL 1]
Japanese Patent Application Publication No. 2009-507240

### [Summary of Invention]

### [Technical Problem]

However, it is burdensome for the user to manually associate a measurement probe with a receiver or a holding portion. Also, if the user establishes an incorrect association, an incorrect measurement probe may be called, potentially causing problems such as damage to the measurement probe.

In view of the above problems, it is an objective of the present invention to provide a machine tool that can associate a wireless communication type measurement probe in a simplified manner.

### [Solution to Problem]

### (Aspect 1)

In order to solve the above problems, a machine tool according to aspect 1 of the present invention is a machine tool for measuring a dimension of an object to be cut by holding a measurement probe and bringing the measurement probe into contact with the object to be cut, the machine tool including: a spindle to which the object to be cut is to be attached; a plurality of holding portions capable of holding the measurement probe; a receiver configured to receive a signal transmitted by the measurement probe after the measurement probe comes into contact with the object to be cut; and a control portion configured to control operation of the plurality of holding portions, wherein the control portion is configured to move one of the plurality of holding portions, and when the receiver receives a signal from the measurement probe that is not associated with any of the plurality of holding portions, associate the moved holding portion with the measurement probe that has transmitted the signal to the receiver on the basis of the signal received by the receiver.

### (Aspect 2)

In aspect 1 described above, the control portion may be configured to associate the moved holding portion with the measurement probe that has transmitted the signal to the receiver during an association operation of the measurement probe.

### (Aspect 3)

In aspect 1 described above, the holding portions may be capable of holding a tool for cutting the object to be cut.

### (Aspect 4)

In aspect 1 described above, the machine tool may further include: a tool rest including a plurality of tool holding portions capable of holding a tool for cutting an object to be cut; and a setting portion capable of setting any of the plurality of tool holding portions as the holding portion that holds the measurement probe.

### (Aspect 5)

In order to solve the above problems, a method for controlling a machine tool according to aspect 6 of the present invention is a method for controlling a machine tool for measuring a dimension of an object to be cut by holding a measurement probe and bringing the measurement probe into contact with the object to be cut, in which the machine tool includes a spindle to which the object to be cut is attached, a plurality of holding portions capable of holding the measurement probe, and a receiver that receives a signal transmitted by the measurement probe after the measurement probe comes into contact with the object to be cut, and the method includes: a contact step of moving one of the plurality of holding portions and bringing the measurement probe held by the moved holding portion into contact with an object; and an association step of associating the moved holding portion with the measurement probe that has transmitted a signal to the receiver on the basis of the signal received by the receiver.

### (Aspect 6)

In aspect 5 described above, the object may be an object to be cut that is held by the spindle.

### (Aspect 7)

In aspect 5 described above, the machine tool may include a plurality of tool holding portions capable of holding a tool for cutting the object to be cut, and the method may further include a setting step of setting any of the plurality of tool holding portions as the holding portion for holding the measurement probe before the contact step.

The configurations of the above aspects can be adopted in combination where possible.

### [Advantageous Effects of Invention]

According to the present invention, it is possible to provide a machine tool that can associate a wireless communication type measurement probe in a simplified manner.

### [Brief Description of Drawings]

[Fig. 1]

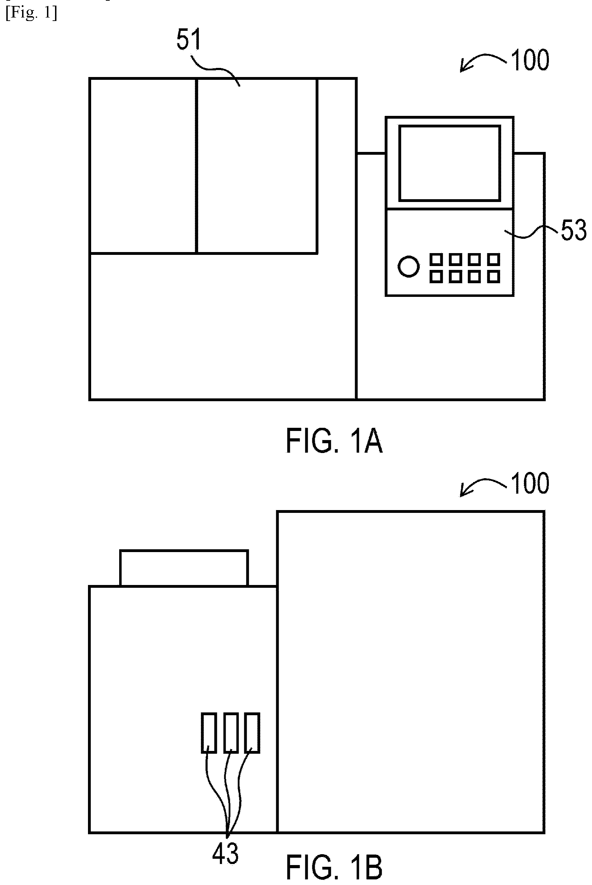

   Fig. 1 is an external view showing a schematic configuration of a machine tool according to a first embodiment.
[Fig. 2]

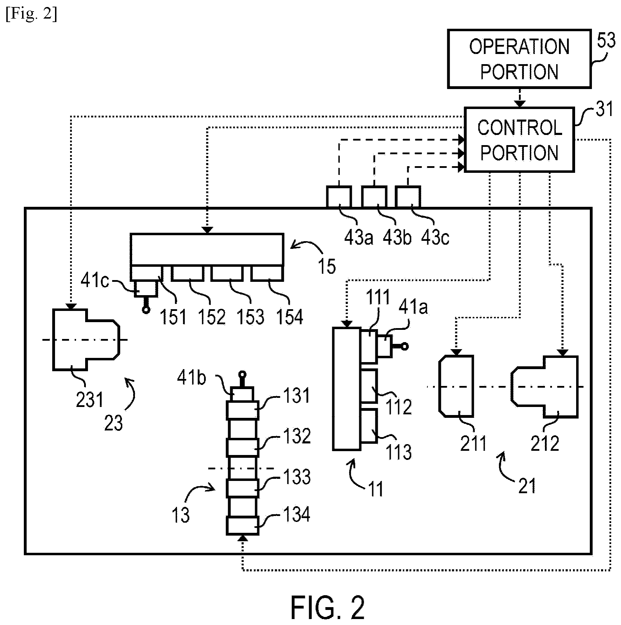

   Fig. 2 is a block diagram showing a schematic configuration of the inside of the machine tool according to the first embodiment.
[Fig. 3]

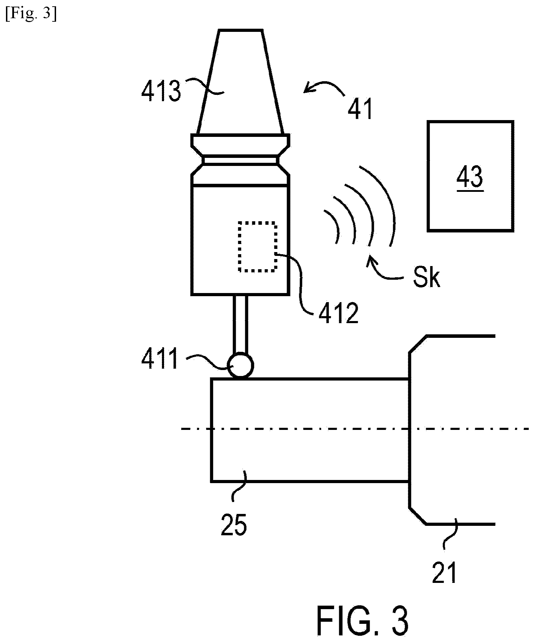

   Fig. 3 is an explanatory diagram of a measurement probe.
[Fig. 4]

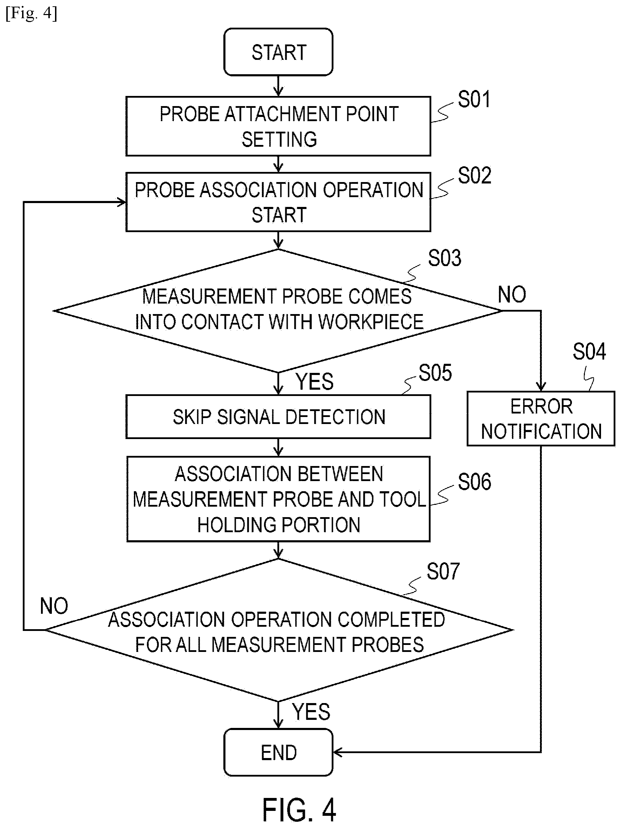

   Fig. 4 is a flowchart of a measurement probe association method according to the first embodiment.
[Fig. 5]

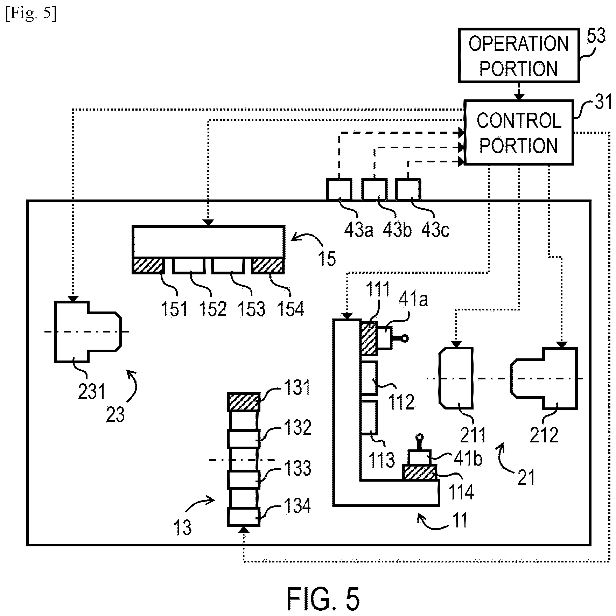

   Fig. 5 is a block diagram showing a schematic configuration of the inside of a machine tool according to a second embodiment.

### [Description of Embodiments]

Referring to the drawings, exemplary modes for carrying out the present invention will be described in detail based on embodiments. The dimensions, materials, shapes, and relative arrangements of the components described in the embodiments may be modified as appropriate according to the configuration of the apparatus to which the invention is applied and various conditions. That is, the description is not intended to limit the scope of the present invention to the following embodiments.

### <First Embodiment>

### (Machine Tool 100)

First, a schematic configuration of a machine tool 100 according to a first embodiment of the present invention is described. Figs. 1A and 1B are external views showing a schematic configuration of the machine tool 100 according to the first embodiment. Fig. 1A shows the front side of the machine tool 100, and Fig. 1B shows the rear side of the machine tool 100.

On the front side of the machine tool 100, a cover 51, which can be opened and closed by sliding, and an operation portion 53, which is operated by the user to instruct the machine tool 100 to perform machining operations and the like, are provided. With the cover 51 open, the user can access the inside of the machine tool 100 to attach a cutting tool, a workpiece (object to be cut), and a measurement probe to the machine tool 100. During machining, the cover 51 is locked in the closed position, preventing foreign matter from entering the machine tool 100 and preventing chips generated during machining from scattering outside the machine tool 100.

The operation portion 53 is a user interface that allows the user to perform various settings. The user can create a machining program through the operation portion 53 and cause the machine tool 100 to perform machining operations and measurement operations. The operation portion 53 also includes a display panel, through which the user can learn the measurement results, the occurrence of errors, and the like.

On the rear side of the machine tool 100, multiple receivers 43 are provided to receive signals transmitted from measurement probes used for measuring the dimensions of a workpiece and the like. When a measurement probe comes into contact with a workpiece inside the machine tool 100 and transmits a signal, the receiver 43 corresponding to that measurement probe receives the signal. Upon detecting that a receiver 43 has received a signal, the machine tool 100 stops the movement of the measurement probe, and obtains and stores position information about the contact portion between the measurement probe and the workpiece. Then, the machine tool 100 can calculate the dimensions of the workpiece on the basis of multiple pieces of position information.

Referring to Fig. 2, the internal configuration of the machine tool 100 is now described. Fig. 2 is a block diagram showing a schematic configuration of the inside of the machine tool 100. The machine tool 100 of the first embodiment includes a plurality of workpiece holding portions, a plurality of tool rests, and a control portion 31, which controls the operation of the workpiece holding portions and the tool rests. Fig. 2 is a diagram for illustrating the configuration of the machine tool 100, and does not limit the positions or directions of arrangement of the workpiece holding portions and the tool holding portions.

The machine tool 100 includes a first workpiece holding portion 21 and a second workpiece holding portion 23 as workpiece holding portions that hold a workpiece with a spindle. The first workpiece holding portion 21 includes a guide bush 211, which supports the workpiece and reduces deflection of the workpiece, and a first spindle 212, which holds the workpiece and rotates integrally with the workpiece. The first spindle 212 is a front spindle and is configured to be movable in the direction of the rotation axis of the held workpiece. On the other hand, the second workpiece holding portion 23 includes a second spindle 231, which holds a workpiece and rotates integrally with the workpiece. The second spindle 231 is a rear spindle and is configured to be movable in the horizontal direction including the direction of the rotation axis of the held workpiece.

The first spindle 212 and the second spindle 231 are disposed facing in directions opposite to each other. With this configuration, after machining one end surface of the workpiece held by the first spindle 212, the workpiece can be cut off and then held by the second spindle 231 to machine the other end surface of the workpiece.

The machine tool 100 includes a first tool rest 11 having a gang shape, a second tool rest 13 having a turret shape, and a third tool rest 15 having a gang shape. The gang-shaped first and third tool rests 11 and 15 each include multiple tool holding portions, which are capable of holding cutting tools and arranged in a row. The turret-shaped second tool rest 13 is configured to be rotatable, and multiple tool holding portions are arranged in a circle around the rotation axis of the second tool rest 13. Each tool rest is configured to be movable relative to the first spindle 212 and the second spindle 231. A cutting tool held in a tool holding portion and a workpiece held in a workpiece holding portion are moved relative to each other so that the cutting tool cuts the workpiece, thereby machining the workpiece into a desired shape.

The first tool rest 11 includes tool holding portions 111, 112, and 113 and is driven mainly to cut a workpiece held by the first workpiece holding portion 21 on the front side. The second tool rest 13 includes tool holding portions 131, 132, 133, and 134. The third tool rest 15 includes tool holding portions 151, 152, 153, and 154 and is driven mainly to cut a workpiece held by the second workpiece holding portion 23 on the rear side. Each tool holding portion is capable of holding the same cutting tool and measurement probe. The number and arrangement of the tool holding portions provided on the tool rests are not limited to those shown in Fig. 2, and various modifications are possible.

The machine tool 100 includes multiple receivers 43 as described above. Each of the multiple receivers 43 is configured to receive a signal from a different measurement probe 41. Fig. 2 shows three measurement probes 41 attached to the machine tool 100. In the following description, the three measurement probes 41 and the three receivers 43 are distinguished from one another by adding suffixes to the reference numerals as necessary. In the configuration example shown in Fig. 2, a measurement probe 41a is attached to the tool holding portion 111 of the first tool rest 11, a measurement probe 41b is attached to the tool holding portion 131 of the second tool rest 13, and a measurement probe 41c is attached to the tool holding portion 151 of the third tool rest 15. Also, the signal transmitted by the measurement probe 41a is received by the receiver 43a, the signal transmitted by the measurement probe 41b is received by the receiver 43b, and the signal transmitted by the measurement probe 41c is received by the receiver 43c.

In the first embodiment, one receiver is provided for one measurement probe, but only a single receiver capable of identifying and receiving signals from multiple measurement probes may be provided.

The control portion 31, which is the controller of the machine tool 100, drives the first tool rest 11, the second tool rest 13, the third tool rest 15, the first workpiece holding portion 21, and the second workpiece holding portion 23 on the basis of the result of input to the operation portion 53 and the like to perform machining operations and measurement operations. Upon detecting that one of the receivers 43a to 43c has received a signal during a workpiece measurement operation, the control portion 31 obtains position information of the contact portion between the workpiece and the measurement probe 41 corresponding to the receiver 43 that has received the signal. Then, the control portion 31 calculates the dimensions of the workpiece on the basis of multiple pieces of position information.

### (Measurement Probe)

Referring to Fig. 3, the measurement probe 41 is now described in detail. The measurement probe 41 is a wireless communication type touch sensor probe. Fig. 3 is an explanatory diagram of the measurement probe 41 and schematically shows a state in which the measurement probe 41 is in contact with a workpiece 25 held by the first workpiece holding portion 21. The measurement probe 41 has a spherical stylus 411, a transmitter 412 for transmitting a signal, and a shank 413, which functions as an adapter for engagement with a tool holding portion.

The shank 413 is configured to be engageable with a tool holding portion provided on the first tool rest 11, the second tool rest 13, or the third tool rest 15. That is, the user can attach the measurement probe 41 by selecting a tool holding portion that is at an optimal position among multiple tool holding portions according to the machining shape and measurement dimensions of the workpiece. This configuration can avoid interference between the measurement probe 41 and the workpiece or the like, and also improve the working efficiency of the measurement operation. Moreover, since the machine tool does not need to include a holding portion dedicated to a measurement probe, it is possible to prevent the machine tool from becoming large in size, and to prevent an increase in manufacturing costs.

When a tool rest moves and the stylus 411 of the measurement probe 41 held by a tool holding portion of the tool rest comes into contact with the workpiece 25, the transmitter 412 transmits a skip signal Sk. When the receiver 43 receives the skip signal Sk, the control portion 31 stops the movement of the tool rest and obtains position information of the contact portion between the stylus 411 and the workpiece 25. The position information of the contact portion can be obtained on the basis of the position information of the tool rest and the shape of the stylus 411.

For example, to measure the outer diameter of the workpiece 25, the control portion 31 drives the tool rest such that the stylus 411 comes into contact with one end and the other end of the outer circumference surface of the workpiece 25, and calculates the outer diameter of the workpiece 25 on the basis of the position information of one end and the position information of the other end of the outer circumference surface of the workpiece 25. When the measurement operation is completed, the measurement result is displayed on the display panel of the operation portion 53.

During a measurement operation, the control portion 31 drives the tool rest on the basis of association information that associates the measurement probe 41 with the tool holding portion that holds the measurement probe 41. As such, in order for the measurement probe 41 to properly measure the dimensions of the workpiece, the control portion 31 needs to know in advance to which tool holding portion the measurement probe 41 is attached. Furthermore, when the machine tool 100 includes multiple measurement probes 41, to appropriately drive the tool rests and measure dimensions, the control portion 31 needs to distinguish between the measurement probes 41 and store association information between the measurement probes 41 and the tool holding portions. In other words, in order to perform a measurement operation, a measurement probe 41 attached to the machine tool 100 needs to be assigned to a tool holding portion in advance.

In the first embodiment, to associate a measurement probe 41 with a tool holding portion, the control portion 31 stores the address of the skip signal Sk transmitted by the measurement probe 41 and a tool holding portion in association with each other. Since the address of the skip signal Sk is set individually for each measurement probe 41, the control portion 31 can distinguish between the multiple measurement probes 41 and store them in association with tool holding portions.

For example, in the configuration example shown in Fig. 2, the measurement probe 41a is associated with the tool holding portion 111 of the first tool rest 11. Similarly, the measurement probe 41b is associated with the tool holding portion 131 of the second tool rest 13, and the measurement probe 41c is associated with the tool holding portion 151 of the third tool rest 15. By pre-associating the measurement probes 41 with tool holding portions in this manner, the control portion 31 can accurately drive each tool rest during measurement operation and obtain desired position information.

However, if the measurement probes 41 and tool holding portions need to be associated manually, the association operation would be burdensome. Furthermore, if a measurement probe 41 is associated with an incorrect tool holding portion, the measurement probe may interfere with the workpiece or the like and be damaged. In particular, when multiple measurement probes 41 need to be attached, the time and effort required for the association operation further increase, leading to an increased risk of incorrect association.

In this respect, to reduce the time and effort required for the association operation and to prevent damage to measurement probes, the machine tool 100 according to the present invention is configured such that the association between measurement probes 41 and tool holding portions is performed substantially automatically. Referring to Fig. 4, a method for associating a measurement probe 41 with a tool holding portion according to the present invention is described below.

### (Association Method)

Fig. 4 is a flowchart of a method for associating a measurement probe 41 with a tool holding portion. A method for associating a measurement probe 41 with a tool holding portion is described with reference to the flowchart shown in Fig. 4, using the configuration example shown in Fig. 2 as an example. In the first embodiment, the association between a measurement probe 41 and a tool holding portion is established during the association operation of measurement probes 41 that is performed with the workpiece and the measurement probes 41 attached to the machine tool 100.

In associating a measurement probe 41 with a tool holding portion, the user first performs a setting step of setting the tool holding portions to which measurement probes 41 are attached as probe attachment points (step S01). In the first embodiment, the operation portion 53 serves as a setting portion for setting probe attachment points. When setting probe attachment points, the user may input tool holding portions through the operation portion 53, or multiple tool holding portions may be displayed on the display panel of the operation portion 53 as preset attachment point candidates so that the user may select from them.

In this configuration example, the user sets the tool holding portion 111 of the first tool rest 11, the tool holding portion 131 of the second tool rest 13, and the tool holding portion 151 of the third tool rest 15 as probe attachment points in the setting step. At this time, it is not necessary to set which of the multiple measurement probes 41 is attached to each probe attachment point. That is, the user does not distinguish between the measurement probes 41a, 41b, and 41c, and simply sets the tool holding portions 111, 131, and 151 as points to which one of the measurement probes 41 is attached.

After the probe attachment points are set, an association operation of a measurement probe 41 is started (step S02). Then, the control portion 31 performs a contact step of moving the first tool rest 11 so as to bring the measurement probe 41a into contact with the workpiece. Here, if the measurement probe 41a does not come into contact with the workpiece when the first tool rest 11 moves, and the receiver 43a does not receive a signal (NO at step S03), an error is notified to the user (step S04). Various methods can be adopted as method for notifying the user, such as a light source, sound, or display on a display panel.

In contrast, when the measurement probe 41a comes into contact with the workpiece (YES at step S03), the transmitter 412 of the measurement probe 41a transmits a skip signal Sk. Then, the receiver 43a receives the skip signal Sk, and the control portion 31 detects that the receiver 43a has received the skip signal Sk (step S05).

The control portion 31 then stores the address of the detected skip signal Sk in association with the tool holding portion 111, and performs an association step of associating the measurement probe 41a with the tool holding portion 111 (step S06). In this manner, the association between the measurement probe 41a and the tool holding portion 111 is completed.

Subsequently, the association operation is similarly performed until the association operation is completed for all the measurement probes. In this configuration example, since multiple tool holding portions are set as probe attachment points at step S01, the association of all measurement probes has not been completed at this point (NO at step S07). Accordingly, the association of the measurement probes 41b and 41c with tool holding portions is successively performed. Then, steps S02 to S06 are automatically repeated, establishing the association between the measurement probe 41b and the tool holding portion 131 and the association between the measurement probe 41c and the tool holding portion 151. Then, when all the tool holding portions set as probe attachment points at step S01 are associated with a measurement probe 41 (YES at step S07), the control portion 31 ends the association operation.

Through the association operation described above, the measurement probes 41 attached to the machine tool 100 are associated with the respective tool holding portions. When a measurement operation is performed on the basis of the measurement program, the control portion 31 drives each tool rest on the basis of the association information obtained through the association operation described above. As such, to associate the measurement probes 41 with tool holding portions, the user does not need to distinguish between multiple measurement probes 41 when attaching them to tool holding portions and setting probe attachment points.

It is sufficient to perform the association operation of a measurement probe 41 only when a new measurement probe 41 is attached to a tool holding portion or when the attachment position of a measurement probe 41 is changed. In other words, as long as the attachment positions of the measurement probes 41 do not change, the control portion 31 can execute a plurality of different machining programs and measurement programs on the basis of the obtained association information.

As described above, according to the configuration and the association method of the first embodiment, when the user sets the tool holding portion to which a measurement probe is attached as a probe attachment point, the operation of associating the measurement probe with the tool holding portion is automatically performed. That is, when attaching a measurement probe, the user does not need to know the receiver that corresponds to the measurement probe, or the address of the skip signal of the measurement probe, for example. As such, according to the first embodiment, the association between a measurement probe and a tool holding portion is performed substantially automatically by the control portion 31 without the user having to distinguish between individual measurement probes, and the association is thus performed in a simplified manner. Furthermore, when performing the association operation, the user only needs to select the tool holding portion to which the measurement probe is attached, so that there is no risk of an incorrect measurement probe being associated with the tool holding portion. As a result, it is possible to prevent the measurement probe from interfering with the workpiece or the like and being damaged.

### <Second Embodiment>

A second embodiment of the present invention is now described. The second embodiment differs from the first embodiment in that the tool holding portions that can be selected as probe attachment points are limited. In the following description of the second embodiment, the same configurations as those in the first embodiment are given the same reference numerals and the description thereof will be omitted, and only the characteristic configurations of the second embodiment will be described.

Referring to Fig. 5, the internal configuration of a machine tool 100 according to the second embodiment is described. Fig. 5 is a block diagram showing a schematic configuration of the inside of the machine tool 100. A first tool rest 11 includes tool holding portions 111, 112, 113, and 114, a second tool rest 13 includes tool holding portions 131, 132, 133, and 134, and a third tool rest 15 includes tool holding portions 151, 152, 153, and 154. Fig. 5 is a diagram for illustrating the configuration of the machine tool 100 according to the second embodiment, and does not limit the positions or directions of arrangement of each workpiece holding portion and the tool holding portion.

The tool holding portions shown in Fig. 5 are configured such that the same cutting tool and the measurement probe 41 can be attached thereto. However, even when the tool holding portions are configured to allow attachment of the measurement probe 41, there may be cases where the attachment position of the measurement probe 41 is restricted in consideration of the positional relationship with other members. For example, depending on the position where the measurement probe 41 is attached, there is a risk that a cutting tool attached to the same tool rest may interfere with the workpiece during measurement operation. For this reason, the second embodiment has a configuration in which, when probe attachment points (step S01) are set in the association method shown in Fig. 4, the tool holding portions that can be selected as probe attachment points are preset.

In the second embodiment, the tool holding portions 111 and 114 of the first tool rest 11, the tool holding portion 131 of the second tool rest 13, and the tool holding portions 151 and 154 of the third tool rest 15, which are diagonally shaded in Fig. 5, are preset as probe attachment point candidates. In setting a probe attachment point, only those five tool holding portions are selectable. For example, as shown in Fig. 5, in a situation where the measurement probes 41 are attached to the tool holding portions 111 and 114 of the first tool rest 11, the user only needs to select the tool holding portions 111 and 114 from the five options when setting the probe attachment points.

As described above, according to the configuration and the association method of the second embodiment, tool holding portions suitable for the measurement operation are preset as probe attachment point candidates. Thus, as compared with the first embodiment, the measurement operation can be performed more efficiently. Furthermore, the risk of the cutting tool interfering with the workpiece or a tool holding portion during measurement can be reduced.

### <Other Embodiments>

The above-described embodiments are merely examples, and the present disclosure can be modified appropriately without departing from the spirit and scope of the present disclosure. For example, in the above-described embodiments, the tool holding portion functions as a holding portion for holding a measurement probe, but a holding portion dedicated to a measurement probe may also be provided.

Furthermore, the processes described as being performed by one apparatus may be shared and executed by multiple apparatuses. Alternatively, the processing described as being performed by different apparatuses may be performed by a single apparatus. In a computer system, the hardware configuration for implementing each function can be flexibly changed.

### [Reference Signs List]

- 31: Control portion
- 41: Measurement probe
- 43: Receiver
- 100: Machine tool
- 111: Tool holding portion (holding portion)
- 212: First spindle (spindle)

## Claims

1. A machine tool for measuring a dimension of an object to be cut by holding a measurement probe and bringing the measurement probe into contact with the object to be cut, the machine tool comprising:
a spindle to which the object to be cut is to be attached;
a plurality of holding portions capable of holding the measurement probe;
a receiver configured to receive a signal transmitted by the measurement probe after the measurement probe comes into contact with the object to be cut; and
a control portion configured to control operation of the plurality of holding portions, wherein
the control portion is configured to move one of the plurality of holding portions, and when the receiver receives a signal from the measurement probe that is not associated with any of the plurality of holding portions, associate the moved holding portion with the measurement probe that has transmitted the signal to the receiver on the basis of the signal received by the receiver.

2. The machine tool according to claim 1, wherein the control portion is configured to associate the moved holding portion with the measurement probe that has transmitted the signal to the receiver during an association operation of the measurement probe.

3. The machine tool according to claim 1, wherein the holding portions are capable of holding a tool for cutting the object to be cut.

4. The machine tool according to claim 3, further comprising:
a tool rest including a plurality of tool holding portions capable of holding a tool for cutting the object to be cut; and
a setting portion capable of setting any of the plurality of tool holding portions as the holding portion that holds the measurement probe.

5. A method for controlling a machine tool for measuring a dimension of an object to be cut by holding a measurement probe and bringing the measurement probe into contact with the object to be cut, wherein
the machine tool includes a spindle to which the object to be cut is attached, a plurality of holding portions capable of holding the measurement probe, and a receiver that receives a signal transmitted by the measurement probe after the measurement probe comes into contact with the object to be cut, and
the method comprises:
a contact step of moving one of the plurality of holding portions and bringing the measurement probe held by the moved holding portion into contact with an object; and
an association step of associating the moved holding portion with the measurement probe that has transmitted a signal to the receiver on the basis of the signal received by the receiver.

6. The method for controlling a machine tool according to claim 5, wherein the object is an object to be cut that is held by the spindle.

7. The method for controlling a machine tool according to claim 5, wherein
the machine tool includes a plurality of tool holding portions capable of holding a tool for cutting the object to be cut, and
the method further comprises a setting step of setting any of the plurality of tool holding portions as the holding portion for holding the measurement probe before the contact step.
